# EUROPEAN PATENT APPLICATION

(11) **EP 3 454 292 A1**
(43) Date of publication of application: **13.03.2019**
(21) Application number: 18191769.1
(22) Date of filing: 30.08.2018
(51) Int. Cl.: G06T 1/20

(54) **IMAGE PROCESS METHOD AND PROGRAM**

(30) Priority: 06.09.2017 JP 2017171076
(71) Applicant: OLYMPUS CORPORATION, Hachioji-shi Tokyo 192-8507 (JP)
(72) Inventor: HAYASHI, Shinichi, Tokyo, 192-8507 (JP)
(74) Representative: Gunzelmann, Rainer

(57) **Abstract**

An image process method includes a first step in which an image process is performed on an input multi-frame image, and a process result corresponding to a frame image, in the multi-frame image, for which an image process has been completed is generated, and a second step in which the generated process result is output to an image display device. Different process regions respectively perform the first step and the second step, and the second step is performed while the first step is being performed.

## Description

### Background of the Invention

### Field of the Invention

The present invention is related to an image process method for an input image and a program.

### Description of the Related Art

Many observations using microscopes have conventionally adopted a technique of performing an image process on a picked up image so as to obtain a new image. For example, the technique, disclosed by U.S. Unexamined Patent Application Publication No. 2016/0062100, related to light field microscope constructs a 3D deconvolution image by using a point spread function (PSF) and light information obtained by an image pickup element.

The image process, disclosed by U.S. Unexamined Patent Application Publication No. 2016/0062100, that generates a 3D deconvolution image may take a computation time of 1 or 2 minutes per frame image. An example of applications of light field microscope is an experiment such as cerebral-nerve calcium imaging, in which time-lapse photography is performed to obtain multi-frame image data including many frame images. The generation of 3D deconvolution images for all frame images (for 9000 frames) obtained through for example five minutes of time-lapse photography at a frame rate of 30 fps takes a long time as a week before the completion of the image process in this type of experiment.

As described above, if an image process that takes several minutes per frame is to be performed on a multi-frame image, an immense time is taken to complete the image processes on all the frames. The result of an experiment can be confirmed only after waiting for a long time after starting image processes, which means that a long time before confirming the experiment result is wasted when a desired image has failed to be obtained.

In view of the above, it is an object of the present invention to provide a technique that enables sequential confirmation of process results corresponding to individual frame images even during an image process that is performed on a multi-frame image.

### Summary of the Invention

The image process method according to an aspect of the present invention is an image process method including a first step in which an image process is performed on an input multi-frame image, and a process result corresponding to a frame image for which an image process has been completed is sequentially generated and a second step in which the generated process result is output to an image display device, wherein different process regions respectively perform the first step and the second step, and the second step is performed while the first step is being performed.

The program according to an aspect of the present invention is a program that causes a computer to perform a first step in which an image process is performed on an input multi-frame image, and a process result corresponding to a frame image for which the image process has been completed is sequentially generated, and a second step in which the generated process result is output to an image display device, wherein different process regions respectively perform the first step and the second step, and the second step is performed by a computer while the first step is being performed.

The present invention makes it possible to sequentially confirm process results corresponding to respective frame images for which image processes are completed, even when image processes on a multi-frame image have not been completed on all the frames.

### Brief Description of the Drawings

The present invention will be more apparent from the following detailed description when the accompanying drawings are referenced.
FIG. 1 illustrates a schematic configuration of devices for implementing an image process method according to the first embodiment;
FIG. 2 illustrates functional configurations of a client machine and a server machine according to the first embodiment;
FIG. 3 illustrates an example of a window that is displayed on an image display device accompanying viewing control;
FIG. 4 illustrates a flowchart of the image process method;
FIG. 5 illustrates a schematic configuration of the devices for implementing the image process method according to the second embodiment;
FIG. 6 illustrates an example of a window that is displayed on the image display device accompanying viewing control according to a variation example; and
FIG. 7 illustrates a hardware configuration of the devices used in the first and second embodiments.

### Description of the Embodiments

Hereinafter, explanations will be given for an image process method according to the first embodiment of the present invention and a device configuration that implements the image process method.

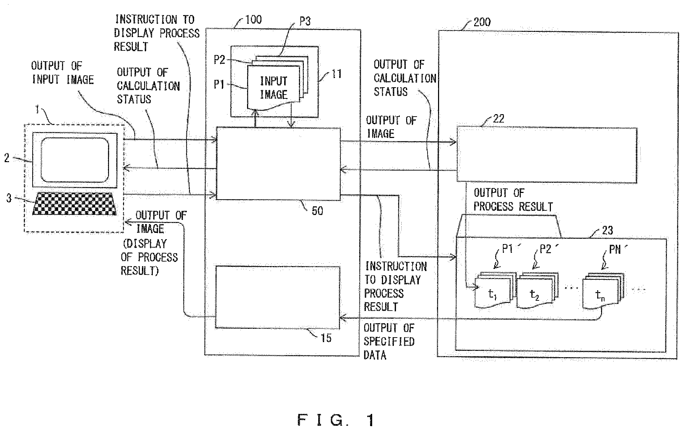

FIG. 1 illustrates a schematic configuration of devices for implementing an image process method according to the first embodiment.

An external personal computer (external PC) 1 includes an image display device 2 such as a monitor etc. and a manipulation unit 3 such as a keyboard, a mouse, etc. The external PC 1 is a computer for transporting image data, and stores a multi-frame image obtained in advance through a light field microscope in the present embodiment. The multi-frame image includes for example a series of frame images photographed at different times in time-lapse photography. The image display device 2 displays various types of data received from a client machine 100. The manipulation unit 3 transmits a manipulation instruction from the user to the client machine 100.

The client machine 100 includes a storage unit 11, a display control unit 15, and a control unit 50. The storage unit 11 receives input images (frame images P1, P2, P3, ...) from the external PC 1 to store the images. Frame images P1, P2, P3,... correspond to different shooting times t1, t2, t3,... in FIG. 1. The control unit 50 controls various types of steps implemented by the client machine 100 and the server machine 200. The control performed by the control unit 50 will be specifically described later. The display control unit 15 transmits image data received from the server machine 200 to the image display device 2 to make the image display device 2 display the image.

The server machine 200 includes an image process unit 22 and a storage unit 23. The image process unit 22 performs an image process on each input image (multi-frame image) stored in the storage unit 11 of the client machine 100. In the present embodiment, the image process unit 22 performs a deconvolution process on each frame image, and sequentially outputs to the storage unit 23 the process result corresponding to the frame image for which the process has been completed. The storage unit 23 sequentially stores the process results (image groups P1', P2', ... PN' ...) corresponding to the frame images for which the image processes have been completed. Image group P1' is an image group including a plurality of images, obtained through a deconvolution process on frame image P1, that have different Z coordinates. Each of the subsequent image groups including image group P2' is also an image group including a plurality of images, obtained through a deconvolution process on corresponding one of frame images P2, P3,..., that have different Z coordinates. A Z coordinate is a position in a detection light axis direction in the detection optical system of the light field microscope, and generally specifies the coordinate in a height direction.

Also, FIG. 1 illustrates a schematic configuration of the devices in which the client machine 100 receives an input image from the portable external PC 1, whereas input image data may be directly received from a camera provided to the microscope. Also, the manipulation unit 3 that transmits an instruction to the client machine 100 may be a keyboard etc. directly provided to the client machine 100, and the image display device 2 that displays data received from the client machine 100 may be a monitor etc. directly provided to the client machine 100.

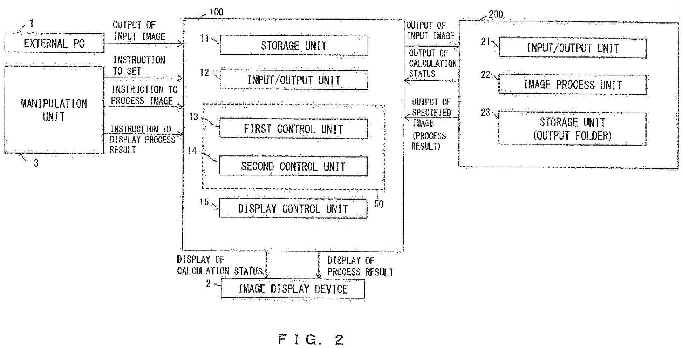

Next, by referring to FIG. 2, detailed explanations will be given for data exchanges between the devices appearing in FIG. 1 and control performed by such devices. FIG. 2 illustrates functional configurations the client machine 100 and the server machine 200 according to the first embodiment. Like constituents are given like reference numerals between FIGS. 2 and 1.

The client machine 100 includes the storage unit 11, an input/output unit 12, the control unit 50, and the display control unit 15.

The storage unit 11 stores an input image (a multi-frame image including frame images P1, P2, P3,...) that is received from the external PC 1.

The input/output unit 12 inputs and outputs data with the external PC 1, the manipulation unit 3, and the server machine 200.

The control unit 50 includes a first control unit 13 and a second control unit 14.

The first control unit 13 controls the implementation of an image process (deconvolution process) performed by the server machine 200. Specifically, the first control unit 13 outputs, to the server machine 200, instructions including an instruction to start or to break an image process (deconvolution process) performed by the server machine 200, on the basis of information received from the manipulation unit 3. In doing so, on the basis of information related to the setting (parameter setting) of an image process received from the manipulation unit 3 and the specifying of a frame image on which an image process is to be performed, the first control unit 13 sets a parameter to be used for an image process performed by the server machine 200, and outputs a frame image on which an image process is to be performed to the server machine 200.

The second control unit 14 uses a process result obtained by the completion of an image process in the server machine 200 to perform a viewing process step. In a viewing process step, the image display device 2 displays a process result so that the user can confirm the process result on the image display device 2. The flow of a viewing process step performed by the second control unit 14 will be described. First, the second control unit 14 receives a calculation status, which is the progress of the image process, from the server machine 200 in detail. Note that a calculation status is information related to a frame image for which an image process has been completed or information including information related to a frame image for which an image process has not been completed, from among multi-frame images on which an image process is to be performed. The second control unit 14 transmits a calculation status to the display control unit 15, and the display control unit 15 makes the image display device 2 display that calculation status. The user recognizes, from the calculation status, a frame image for which an image process has been completed, selects a process result (process result corresponding to a shooting time) that the user wishes to view from among process results corresponding to frame images for which an image process has been completed, and inputs the selection to the client machine 100 via the manipulation unit 3. An instruction, given to the manipulation unit 3, to display a process result corresponding to a frame image for which an image process has been completed will be also referred to as a process-result display instruction. On the basis of a process-result display instruction, the second control unit 14 requests a process result, which is a display target, from the server machine 200, and receives the process result. The second control unit 14 outputs the process result to the display control unit 15.

The display control unit 15 makes the image display device 2 display the process result, which is a displayed target. The display control unit 15 may perform an image process for a display process on a process result received from the second control unit 14 as a displayed target so that the user can view it and thereafter make the process result be displayed. In the present embodiment, the display control unit 15 performs rendering by using an image group, which is a process result, and makes the image display device 2 display it as a 3D image.

The server machine 200 includes an input/output unit 21, the image process unit 22, and the storage unit 23.

The input/output unit 21 inputs and outputs data with the client machine 100.

The image process unit 22 performs an image process (deconvolution process) on a multi-frame image input from the client machine 100, and generates a process result (image groups P1', P2', ... appearing in FIG. 1) corresponding to a frame image for which an image process has been completed. An image process performed by the image process unit 22 is performed on the basis of information received from the first control unit 13 as described above. Also, the image process unit 22 generates and updates a calculation status each time it performs an image process.

The storage unit 23 sequentially stores process results generated by the image process unit 22. The storage unit 23 is output folders in FIG. 1.

On the basis of a request of a process result from the client machine 100, the server machine 200 outputs to the client machine 100 the process result stored in the storage unit 23. Also, the server machine 200 updates a calculation status each time the image process unit 22 generates a process result, and transmits the calculation status to the client machine 100 in detail.

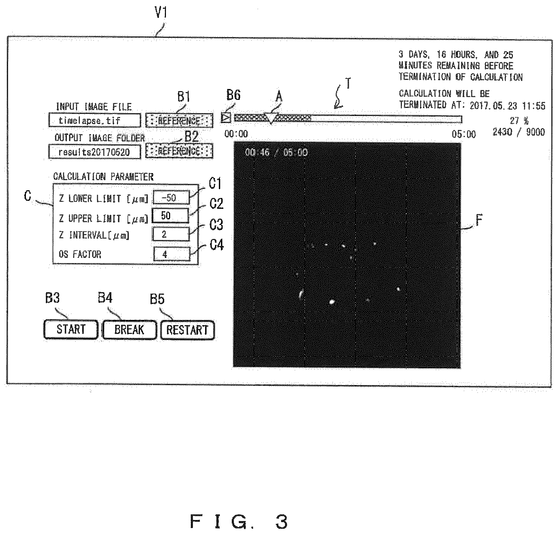

FIG. 3 illustrates an example of window V1 that is displayed on the image display device 2, accompanying a viewing process step. Window V1 displays a calculation status and a process result based on a process-result display instruction as described above.

By selecting icon B1 with a mouse etc. (the manipulation unit 3), it is possible to determine an input image on which an image process is to be performed from among folders (i.e. the storage unit 11) to store an input image (multi-frame image including frame images P1, P2, P3, ...). By selecting icon B2 with a mouse etc., it is possible to specify a folder (i.e. the storage unit 23) to store a process result in the server machine 200.

Bar T is a time scale for shooting time (the time for time-lapse photography) of a frame image as an image process target. In bar T, the shaded portion represents a frame range for which an image process has been completed and the white portion represents a frame range for which an image process has not been completed. In other words, bar T represents a calculation status. When mark A is dragged with a mouse etc. to change its position within the shaded portion, the process result corresponding to the frame image at the shooting time specified by the position along bar T is displayed in image frame F.

In calculation-parameter setting box C, a value can be changed so as to set the value of a calculation parameter related to an image process (deconvolution process) performed by the server machine 200. The value can be set by inputting the value by using the manipulation unit 3 such as a keyboard etc. For example, setting boxes C1 and C2 are boxes for determining the range of Z coordinate in which reconstruction is performed through a deconvolution process. Setting box C3 is for specifying intervals in a Z direction in which an image is constructed. Setting box C4 is for specifying an oversampling factor (OS factor) representing upconversion of the number of pixels through a deconvolution process. In response to the selection of icon B3, B4, and B5 with a mouse etc., the server machine 200 starts, breaks, and restarts an image process (deconvolution process) . Icon B6 is a video play button. When icon B6 is selected with a mouse etc. , image frame F displays an image process result as a video in a time range shaded in bar T in which the image process was completed. Also, a stop button is displayed at the position of icon B6 during the play of a video. In response to the selection of icon B6 with a mouse, the playing of the video is terminated and the video play button is displayed again.

Specific explanations will be hereinafter given for steps in the image process method according to the first embodiment of the present invention performed by the device configurations illustrated in FIG. 1 and FIG. 2.

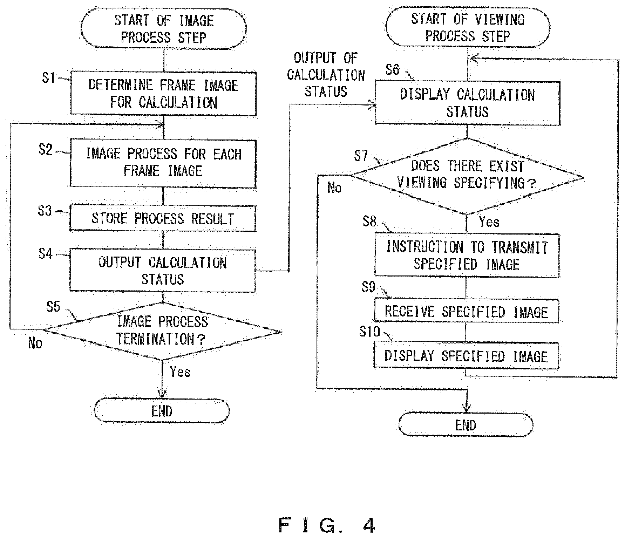

FIG. 4 illustrates a flowchart of the image process method. The flowchart illustrated in FIG. 4 includes an image process step and a viewing process step, the image process step performing an image process (deconvolution process) on a multi-frame image and the viewing process step outputting to the image display device a process result desired by the user. The image process step is controlled and performed by the first control unit 13 and the server machine 200, and the viewing process step is controlled and performed by the second control unit 14 and the display control unit 15.

Explanations will be given for the image process step.

In step S1, the first control unit 13 selects, from among multi-frame images stored in the storage unit 11, a multi-frame image for a calculation (i.e., a multi-frame image that is a target of an image process), and transmits it to the server machine 200. Also, the first control unit 13 sets a parameter used for an image process. Note that the selection of a multi-frame image, the setting of a parameter, etc. are performed on the basis of an input through the manipulation unit 3.

In step S2, the server machine 200 (the image process unit 22) sequentially performs an image process on each frame for the input multi-frame image (selected in step S1), and generates a process result corresponding to a frame image for which the image process has been completed.

In step S3, the image process unit 22 stores the process result in the storage unit 23.

In step S4, the image process unit 22 outputs, to the client machine 100, a calculation status generated each time an image process is performed on a frame image.

In step S5, the image process unit 22 determines whether an image process has been performed on all the frames of the input multi-frame image, and, when the determination in step S5 is NO, repeats from step S2 through step S5 until the determination becomes YES. The image process unit 22 terminates the image process step when the determination becomes YES in step S5.

Next, explanations will be given for the viewing process step.

In step S6, the second control unit 14 outputs a calculation status received from the server machine 200 to the display control unit 15, and makes the image display device 2 display it.

In step S7, the second control unit 14 determines whether viewing was specified by the user, i.e., the presence or absence of the input of a process-result display instruction. When there does not exist the input of a process-result display instruction (NO in step S7), the viewing process step is terminated. When there exists the input of a process-result display instruction (YES in step S7), the process proceeds to step S8.

In step S8, the second control unit 14 requests that the server machine 200 transmit the specified process result, on the basis of the process-result display instruction. In step S9, that process result is received.

In step S10, the display control unit 15 makes the image display device 2 display the process result. Step S7 through step S10 is repeated each time the calculation status is updated.

The image process step and the viewing process step are performed in parallel in time. The calculation statuses are sequentially output to the client machine 100 and the viewing process step is performed before the completion of the image process step on the input multi-frame image. In other words, the image process step and the viewing process step are performed by process regions belonging to different functional blocks. This enables the performance of the viewing process step during the performance of the image process step.

According to the above image process method, a step of performing an image process (deconvolution process), which is performed in step S2 in FIG. 4 taking a long time, and a step of displaying a process result, which is performed in step S10, are performed by process regions that are independent from each other (the display control unit 15 of the client machine 100 and the image process unit 22 of the server machine 200). The step of displaying a process result can be performed without being influenced by the step of the image process. In other words, a process result for which an image process has been completed can be displayed any time during an image process.

Further, a calculation status, which also functions as an indicator of the progress of an image process, is displayed (step S6), and a step of receiving an input from the user via the manipulation unit 3 (step S7) is included, a process result desired by the user can be displayed for the user at an arbitrary timing during an image process. Also, calculation statuses are periodically received by the client machine 100 at timings at which the server machine 200 completes the performance of an image process on each frame image and stores the result. Step S6 and step S7 are performed by the client machine 100 independently from the server machine 200. This enables step S6 and step S7 to be performed without being influenced by the step of the image process.

Also, in the image process method described as a method according to the first embodiment, the control unit 50 of the client machine 100 comprehensively controls a plurality of steps including for example a step of performing an image process (deconvolution process) in step S2 and a step of displaying a process result in step S10. In other words, the step of performing an image process (deconvolution process) in step S2 and the step of displaying a process result in step S10 are performed on the basis of control instructions from the single control unit 50. The control unit 50 collectively starting and breaking an image process, controlling the setting of a parameter for performing the image process, and controlling the display of the process result enables one client machine to receive information input from the manipulation unit 3 and output information to the manipulation unit 3. Thereby, data is exchanged with an external device (such as the external PC 1 etc.) without using a plurality of devices, which prevents the process from becoming complicated.

As described above, the present invention enables the confirmation of a process result corresponding to each frame image during an image process when the image process is performed on a multi-frame image. This eliminates the necessity to wait for the completion of all image processes in order to confirm a process result when image processes that take an immense time are performed. This enables display, during an image process, of a process result obtained by performing the image process, thereby enabling confirmation of process results in detail. Thereby, even when for example an error in the shooting range, a setting, or the like has prevented the obtainment of a desired process result, a process result of a frame for which an image process has been completed can be confirmed at an early stage so as to make a decision to obtain an input image again or other decisions. This reduces wasted time.

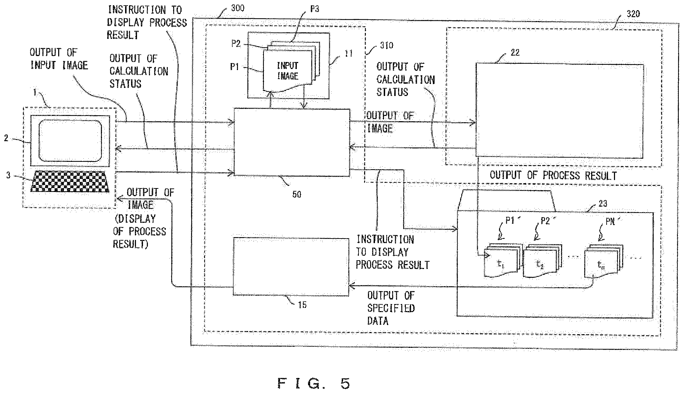

Explanations will be hereinafter given for an image process method according to the second embodiment and a device configuration that implements that image process method. FIG. 5 illustrates a schematic configuration of the device according to the second embodiment.

The image process method according to the present embodiment is implemented by one computer 300 instead of the client machine 100 and the server machine 200. Note that like constituents are given like reference numerals between the first embodiment and the present embodiment.

The computer 300 includes a CPU 310 and a GPU 320. The CPU 310 includes the control unit 50, the display control unit 15, and the storage unit 23, and the GPU 320 includes the image process unit 22. In other words, the computer 300 includes the functions of the client machine 100 and the server machine 200, and in more detail, the image process unit 22, which performs an image process, is included in the GPU 320 and the other functions are included in the CPU 310.

As described above, a configuration including a GPU, which is excellent in parallel arithmetic operation, may be employed, and a configuration in which such a GPU includes the image process unit 22 enables one computer (the computer 300) to implement the image process method explained in the first embodiment. This means that a device configuration to implement the image process method is not limited to a configuration including a client machine and a server machine.

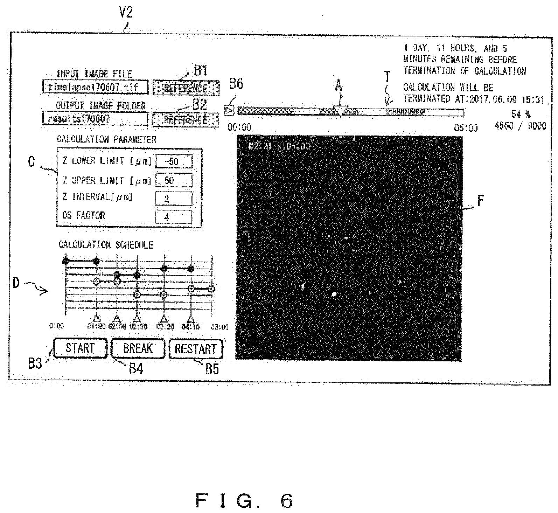

Explanations will be given for variation examples of the first and second embodiments by referring to FIG. 6. FIG. 6 illustrates window V2 that is displayed on the image display device 2 when viewing control according to the present variation example is performed. Explanations for constituents similar to those in window V1 explained in FIG. 3 will be omitted.

Calculation schedule D is a graph in which the horizontal axis represents the time scale for shooting time of frame image and the vertical axis represents process priority. Process priority is related to the order of performing an image process, and the higher the position is along the vertical axis, higher the process priority is in calculation schedule D. Accordingly, the image processes are performed in the vertical order starting from the top. In the example illustrated in FIG. 6, the frame images in the scope depicted by the solid lines and black dots are images for which the image process has completed, the frame images in the scope depicted by the dotted line and white dots are images for which the image process is performing, and the frame images in the scope depicted by the solid lines and white dots are images for which image process has not being performed. In other words, process results that can be displayed at the time shown in FIG. 6 are a process result corresponding to a frame image between 0:00 and 1:30, a process result corresponding to a frame image between 2:00 and 2:30, a process result corresponding to a frame image between 3:20 and 4:10, these process result being obtained by the image process having completed for the frame images.

Calculation schedule D is set through an input from the user before the image process is started through icon B3. For example, the ordering of priority in the time domain is specified in advance by performing a manipulation such as selection, dragging, etc. in calculation schedule D by using the manipulation unit 3 such as a mouse etc.

Using a method such as this makes it possible to determine the priority order of frame images for which the image processes is to be performed, enabling the user to preferentially obtain a process result that the user desires to confirm earlier (such as a process result corresponding to a frame image picked up at a particular time).

A computer having the hardware configuration described below implements the functions of the devices (the client machine 100, the client machine 100, and the computer 300) explained in the first and second embodiments.

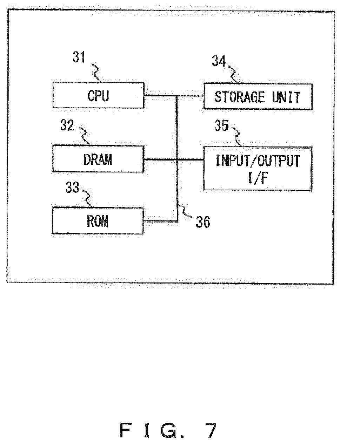

FIG. 7 illustrates a hardware configuration of the devices used in the first and second embodiments of the present invention. Each device includes a CPU 31, a DRAM 32, a ROM 33, a storage unit 34, and an input/output I/F 35 as hardware constituents.

The CPU 31 reads and executes various control programs stored in the ROM 33.

The DRAM 32 provides a working area that temporarily stores the control program and various types of data. The ROM 33 is a storage medium that stores, in a non-volatile manner, the BIOS, which depends upon the hardware.

The storage unit 34 includes a flash memory, a hard disk, etc., and stores the control program and various types of data (a frame image, a process result, etc.). The input/output I/F 35 transmits and receives data with the external environment. The respective constituents are connected via a bus 36.

The above embodiments are specific examples for facilitating understanding of the invention, and the present invention is not limited to the embodiments. The image process methods and the programs described above allow various modifications and changes without departing from the present invention described in the claims.

## Claims

1. An image process method comprising:
a first step in which an image process is performed on an input multi-frame image, and a process result corresponding to a frame image, in the multi-frame image, for which an image process has been completed is generated; and
a second step in which the generated process result is output to an image display device, wherein
different process regions respectively perform the first step and the second step, and the second step is performed while the first step is being performed.

2. The image process method according to claim 1, wherein
the first step is performed by a server machine and the second step is performed by a client machine.

3. The image process method according to claim 1 or claim 2, wherein
the first step and the second step are respectively performed on the basis of control instructions from a single control unit.

4. The image process method according to claim 3, wherein
the control unit sets a parameter used for the image process.

5. The image process method according to one of claim 1 through claim 4, wherein
the image process is a deconvolution process.

6. The image process method according to one of claim 1 through claim 5, wherein
the multi-frame image is an image obtained through time-lapse photography.

7. The image process method according to one of claim 1 through claim 6, wherein
the multi-frame image is an image obtained through a light field microscope.

8. The image process method according to one of claim 1 through claim 7, further comprising
a step in which a calculation status is output to the image display device, the calculation status including information on a frame image, in the multi-frame image, for which the image process has been completed or information on a frame image, in the multi-frame image, for which the image process has not been completed.

9. The image process method according to claim 8, wherein
the second step is performed on the basis of a process-result display instruction, which is an instruction to display a process result corresponding to one of frame images for which the image process has been completed, and the second step is performed while the first step is being performed when there exists the process-result display instruction during the performance of the first step.

10. A program that causes a computer to perform:
a first step in which an image process is performed on an input multi-frame image, and a process result corresponding to a frame image for which the image process has been completed is generated; and
a second step in which the generated process result is output to an image display device, wherein
different process regions respectively perform the first step and the second step, and the second step is performed by a computer while the first step is being performed.
